# FASCICULE DE BREVET EUROPEEN

(11) **EP 1 147 425 B1**
(45) Date de publication et mention de la délivrance du brevet: **13.09.2006**
(21) Numéro de dépôt: 99961132.0
(22) Date de dépôt: 21.12.1999
(51) Int. Cl.: G01P 13/02, G01P 21/02

(54) **PROCEDE ET DISPOSITIF DE REGLAGE D'UNE GIROUETTE**
VERFAHREN UND VORRICHTUNG ZUR JUSTIERUNG EINES RICHTUNGSFAHNEN-DREHWERTGEBERS
METHOD AND DEVICE FOR ADJUSTING A VANE

(30) Priorité: 23.12.1998 FR 9816353
(43) Date de publication de la demande: 24.10.2001
(73) Titulaire: THALES AVIONICS S.A., 78140 Vélizy Villacoublay (FR)
(72) Inventeur: Roberge, Philippe Thomson-CSF Prop. Intellectuelle, 994117 Arcueil Cedex (FR); Fromentin, Serge Thomson-CSF Prop. Intellectuelle, 94117 Arcueil Cedex (FR)
(74) Mandataire: Guérin, Michel
(86) Numéro de dépôt international: PCT/FR1999/003236
(87) Numéro de publication internationale: WO 2000/039593

(56) Documents cités:
- DE-A- 1 927 355
- US-A- 5 361 633

## Description

La présente invention a pour objet un procédé et un dispositif de réglage d'une girouette. Une girouette est un dispositif de mesure de l'orientation du vent. L'invention trouve plus particulièrement son application dans l'industrie aéronautique, où le réglage d'une girouette a une importance vitale. En effet, la valeur de la mesure de l'orientation du vent apparent d'un avion permet d'obtenir, après calcul, la valeur des paramètres d'incidence et de portance. Ces deux paramètres doivent être connus de manière fiable car ils permettent d'assurer des conditions optimales de vol, mais surtout ce sont des paramètres critiques pour la sécurité du vol. Le procédé de l'invention peut néanmoins être utilisé dans d'autres domaines, en particulier en météorologie. Les girouettes installées sur les stations météorologiques doivent également être régulièrement réglées, voire changées.

Une girouette est un organe, dont une partie est externe. Cette partie externe est soumise à des variations climatiques, notamment à des variations de température. De plus, elle peut être abîmée par des chocs avec des corps externes, tels que des oiseaux, des grains de sable ou des particules de glace. Plus généralement, elle peut être usée par des forces externes qui peuvent lui être appliquées. Les conditions extérieures à un avion sont très rudes. La partie de la girouette directement sensible au vent est fragile. Des forces appliquées sur ce dispositif en phase de vol sont très fortes. Ces forces peuvent en outre modifier le réglage de la partie sensible au vent par rapport à des capteurs d'orientation auxquels elle est reliée.

Pour des raisons économiques, lorsque la girouette doit être remplacée, seule une partie limitée de celle ci est remplacée. Une girouette comporte ainsi une palette mobile au vent, un support de capteurs et un corps de sonde. Quelques fois, seule la palette est changée. La fixation d'une nouvelle palette, sur un support de capteurs et sur un corps de sonde déjà en place, ou la fixation d'une nouvelle palette et d'un support de capteur sur un corps de sonde déjà en place doit alors être entreprise. Il y a dans ce cas une nécessité de réglage sur site des capteurs d'orientation par rapport au corps de sonde, en fonction de la nouvelle girouette ainsi constituée.

D'autre part, les compagnies aériennes imposent une vérification fréquente des réglages. Ces vérifications peuvent parfois aboutir à l'observation de dérives, et donc conduire à un reréglage de la girouette. Il apparaît donc nécessaire de mettre en oeuvre une méthode de réglage de la girouette fiable et bon marché.

Le document US A 5,361,633 décrit le réglage d'une girouette par rapport au nord.

Le document DE A 1 927 355 décrit une girouette dont le réglage d'orientation est possible. Ce brevet ne décrit aucun procédé de réglage.

La méthode de réglage la plus précise nécessite de régler la girouette par un passage en soufflerie. En effet, la soufflerie permet de créer un vent d'orientation parfaitement connue. Une girouette complète est alors directement réglée en fonction de l'orientation du vent fourni par la soufflerie. Dans ces conditions une girouette complète placée sur l'avion est parfaitement réglée.

Or un système de réglage de girouettes en soufflerie est très coûteux. Il nécessite notamment des infrastructures spéciales, dans lesquelles des flux d'air créés ont une orientation contrôlée. D'autre part ce système est long à mettre en oeuvre car la durée du réglage est plus longue dans ce cas. Ce type de contrôle nécessiterait en outre l'immobilisation au sol de l'avion pendant la durée du contrôle, or le temps d'immobilisation d'un avion est également coûteux.

Néanmoins, ce type de réglage est faisable par des industriels concepteurs ou réparateurs de girouettes, ayant les moyens d'amortir l'investissement d'une soufflerie d'incidence.

Une girouette est composée d'une partie mécanique sensible au vent, la palette et de capteurs d'orientation. Les capteurs d'orientation sont placés sur un corps de sonde par l'intermédiaire d'un support de capteurs. Le réglage est réalisé en fixant la palette dans une position connue par rapport au corps de sonde, et en réglant mécaniquement la position du support de capteurs par rapport à ce corps de sonde, pour qu'un signal délivré par les capteurs dans la position connue de la palette vaille une valeur attendue.

Dans l'état de la technique, le placement de la palette dans une position connue par rapport au corps de sonde nécessite l'existence et l'identification matérielle sur la palette, d'un repérage correspondant à un zéro aérodynamique. Le zéro aérodynamique est observé en soufflerie. II correspond à une orientation de la palette dans l'axe du vent de la soufflerie, et à une position correspondante du support de capteurs, qui dans ce cas donne un signal de mesure attendu (en général un signal nul). Pour ce zéro aérodynamique, on repère en définitive les positions relatives de la palette par rapport au support de capteurs. Dans la pratique ce repérage est obtenu en repérant la palette par rapport au corps de sonde, et en repérant également le support de capteurs par rapport au corps de sonde. Le zéro aérodynamique est identifié par un trou, réalisé en usine, sur la palette. La précision de centrage de ce trou par rapport à la localisation théorique observée en soufflerie constitue une première erreur. Cette première erreur est appelée erreur de précision.

Le principe de réglage, dans l'état de la technique est de figer le trou représentant le zéro aérodynamique dans une position connue par rapport au corps de sonde, et de placer le capteur d'orientation, par rapport à cet ensemble figé, dans une position telle que le signal de mesure délivré soit le signal de mesure attendu (en général le signal nul). Le problème de ce type de réglage est de constituer à l'identique, au cours de réglages successifs, l'ensemble figé, dans une position de référence, du corps de sonde et de la palette. Du fait de ces multiples interventions, le trou se déforme, il s'agrandit. La déformation au cours du temps du trou symbolisant le zéro aérodynamique crée un deuxième type d'erreur. Ce deuxième type d'erreur est variable dans le temps, il est donc appelé erreur de répétitivité du réglage. En effet, la déformation de ce trou conduit à la fixation du corps de sonde et de la partie sensible au vent dans des positions variables. Alors que cet ensemble doit être figé dans une position de référence unique.

La présente invention a pour but de résoudre les erreurs de précision et de répétitivité de la méthode connue de réglage des girouettes. L'objet de l'invention est un procédé de réglage d'une girouette. Le principe de réglage est basé sur une succession de quatre étapes.

Une première étape consiste à placer l'ensemble palette, support des capteurs d'orientation et corps de sonde dans une position connue et figée, par l'intermédiaire d'un banc de calage. Le support de capteurs et le corps de sonde utilisés dans ce cas peuvent être des supports et des corps d'usine, uniques, et servir pour toutes les palettes fabriquées et à régler. Dans la position figée, le support de capteurs est fixé sur le corps de sonde. Cet ensemble est lui-même fixé au banc de calage. Puis la palette de la girouette est poussée contre une poutre de ce banc. On mesure alors une première valeur du signal délivré par les capteurs, appelée angle au zéro mécanique.

Une deuxième étape consiste à placer l'ensemble de ce dispositif, avec une même disposition figée relative du support de capteurs et du corps de sonde, sur un deuxième banc de calage, laissant la palette mobile. Au cours de cette deuxième étape, la palette est soumise à une soufflerie produisant un vent orienté de manière connue vis à vis de l'ensemble figé, et orienté de manière connue vis à vis du deuxième banc de calage. On mesure alors une deuxième valeur du signal délivré par les capteurs, appelée angle au zéro aérodynamique.

Au cours de ces deux premières étapes, une différence de signaux délivrés par les capteurs d'orientation est relevée. Cette différence de signaux délivrés est équivalente à un angle de rotation de la palette. Cette différence est appelée écart angulaire entre zéro mécanique et zéro aérodynamique. Dans une troisième étape, la valeur de cet angle est inscrite sur un document de suivi de la palette, et ou directement sur la palette. Cet angle permettra ensuite de régler rapidement les capteurs de rotation en fonction de la spécificité de la palette montée.

Une dernière étape est la seule à être réalisée, sur site, lors du réglage d'une palette nouvelle sur un ensemble corps de sonde et capteurs d'orientation existants, ou lors du reréglage d'une girouette.

Au cours de la dernière étape, qui correspond strictement à l'action de réglage, la palette et le corps de sonde sont figés dans une position identique à celle de la première étape. A cet effet, un banc de calage identique en tout point au banc de calage de la première étape est utilisé sur site pour le réglage. Le réglage consiste alors à faire tourner autour d'un axe de rotation de la palette, le support des capteurs par rapport au corps de sonde. On effectue ce réglage en mesurant le signal produit par les capteurs. On retient une position du support de capteurs par rapport au corps de sonde pour laquelle le signal mesuré est égal à la différence des signaux délivrés au cours des deux premières étapes, soit l'écart angulaire. Dans ce cas, le réglage de la girouette se réalise avec la précision de mesure de ces capteurs, qui est bien supérieure à une précision optique ou mécanique d'alignement d'un trou comme dans l'état de la technique.

L'invention a donc pour objet un procédé de réglage d'une girouette selon la revendication 1.

L'invention a également pour objectif un dispositif de réglage d'une girouette de mesure de l'orientation du vent selon la revendication 7.

En outre le support des capteurs possède en général deux capteurs rotatifs entraînés par l'axe de rotation de la palette. Pour une incidence normale du vent sur la palette (orientée sensiblement selon le fuselage de l'avion), les deux capteurs sont placés latéralement de part et d'autre de cet axe de rotation. Il apparaît que le jeu de l'axe de rotation originel, qui augmente petit à petit sur l'axe de rotation de la palette, entraîne un déréglage des indications fournies par les deux capteurs. Ce déréglage est d'autant plus difficile à combattre que le jeu de l'axe de rotation de la palette subsiste et évolue au cours du temps.

Dans l'invention on a voulu éviter les conséquences néfastes de ce jeu qui ne peut pas être supprimé, sauf à changer très fréquemment un guidage de l'axe de la palette. Dans l'invention, on a choisi de placer les deux capteurs rotatifs dans un alignement avec l'axe de rotation qui comporte la direction la plus fréquente (ou la plus critique) du vent. Dans cette position, le jeu de l'axe de rotation subsiste mais ses effets sont neutralisés : les indications fournies par les capteurs ne sont pas faussées. Pour une autre orientation du vent, mais qui correspond à une incidence moins fréquente du vent (ou moins critique), les indications sont toujours faussées, mais c'est moins gênant car moins fréquent ou moins critique.

Le dispositif de réglage est alors avantageusement caractérisé en ce que l'arbre est tournant, en ce que l'arbre entraîne un organe de mesure qui comporte un jeu de capteurs, chaque capteur tournant autour d'un axe parallèle à l'arbre tournant, en ce que les axes des capteurs sont situés dans un plan passant par un bord d'attaque de la palette et l'arbre de rotation de la palette pour une position principale de la girouette. Les modes particuliers de réalisation de l'invention sont définis dans les revendications dépendantes 2 à 6 et 8 à 12.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1a : une représentation schématique d'une girouette dans un banc de calage d'usine, matérialisant la première étape de l'invention ;
- Figure 1b : une représentation schématique d'une girouette dans un banc de calage soumise à un vent d'orientation connue, matérialisant la deuxième étape de l'invention ;
- Figure 1c : une représentation schématique d'une girouette dans un banc de calage de site, banc de calage de site identique au banc de calage d'usine. Cette représentation matérialise la quatrième étape de l'invention ;
- Figure 2a : une représentation schématique d'une vue de dessus d'une girouette montée sur un avion, comportant plusieurs capteurs d'orientation, soumise à un vent donné ;
- Figure 2b : une représentation schématique d'une vue de dessus d'une girouette montée sur un avion, comportant plusieurs capteurs d'orientation, soumise à un vent donné, d'une orientation à 90° de celle de la

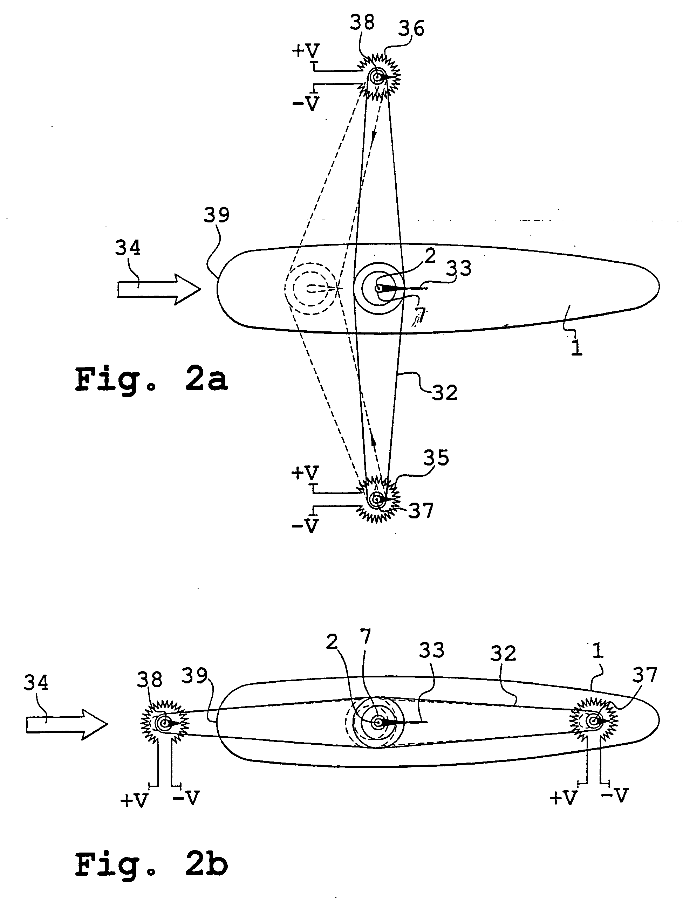

figure 2a, et conforme à l'invention.

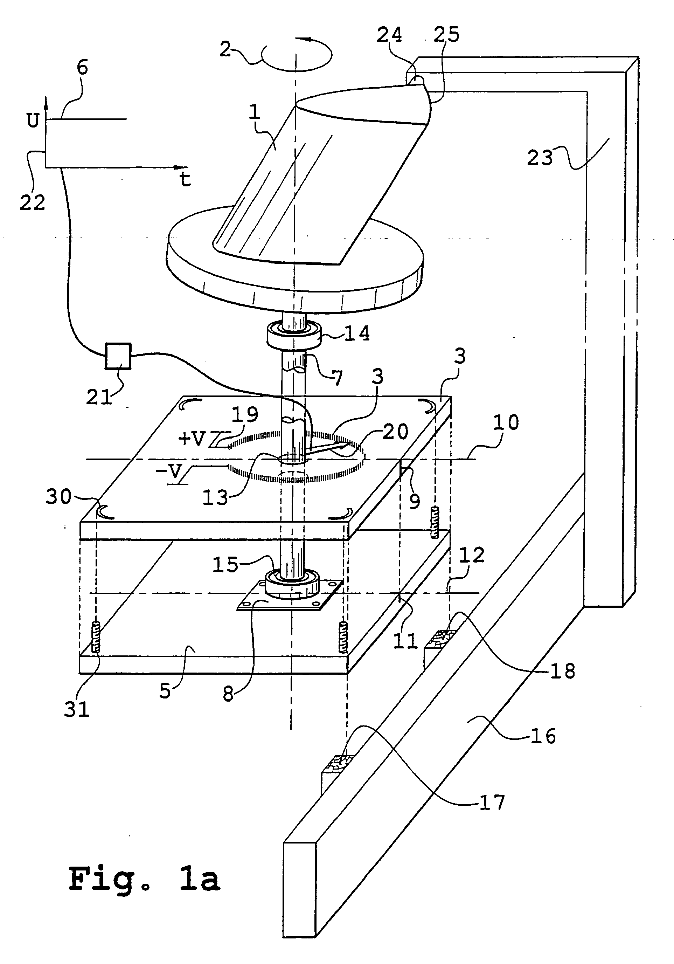

Selon les figures 1a à 1c, une girouette comporte une palette 1, organe sensible au vent et mobile autour d'un axe de rotation 2. Un capteur d'orientation 3 est supporté par un plateau 4, support de capteurs. La girouette comporte encore un corps de sonde 5. Le capteur d'orientation 3 transforme l'orientation mécanique fournie par la palette en un signal électrique 6. La palette 1 est maintenue au corps de sonde 5, par un arbre 7, dont l'orientation est coaxiale avec l'axe de rotation 2. L'arbre 7 est fixé à la palette 1. L'arbre 7 est maintenu au corps de sonde 5 par un palier 8. Le palier 8 autorise une mobilité de la palette 1 dans un domaine comportant un seul degré de liberté. En effet, la palette 1 et l'arbre 7 ne sont mobiles que tournant autour de l'axe 2.

Le plateau 4 est mobile autour de l'axe de rotation 2. La position du plateau 4 peut être définie par rapport à celle du corps de sonde 5. Le plateau 4 possède par exemple un repère 9, le repère 9 est préférentiellement gravé sur un chant du plateau 4. Un axe 10 est défini orthogonal à l'axe de rotation 2 et passant par le repère 9. De même le corps de sonde 5 possède un repère 11, qui est préférentiellement gravé sur le corps de sonde 5. Un axe 12 est défini orthogonal à l'axe de rotation 2 et passant par le repère 11. Les repères 9 et 11 sont gravés de manière à ce qu'ils soient plus ou moins en vis à vis lors du montage de la girouette. Préférentiellement le calage du plateau 4 sur le corps de sonde 5 est réalisé avec un piétage, comportant deux pieds de calage qui peuvent donner une précision de calage au centième de degré.

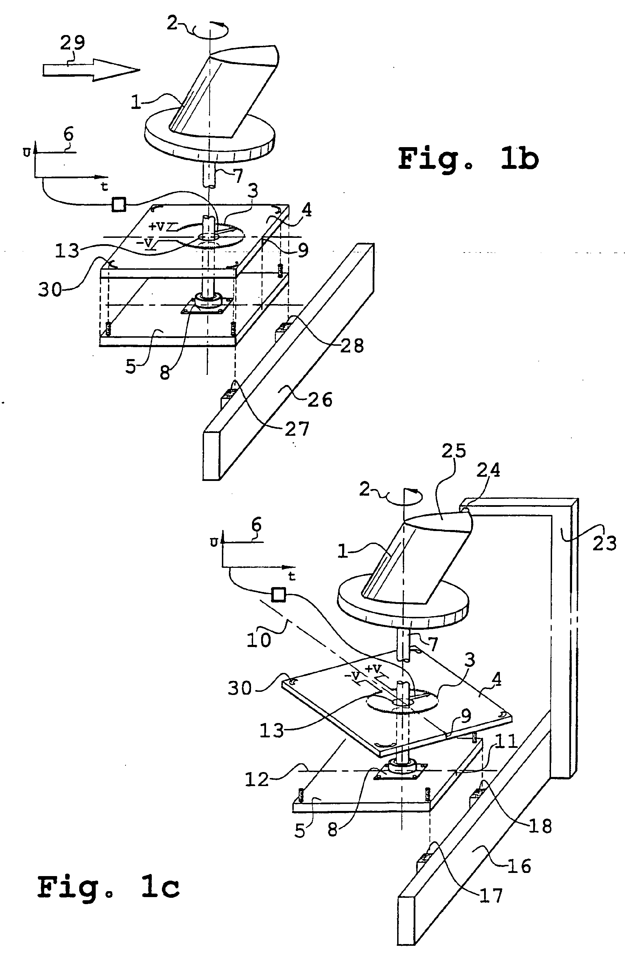

Le plateau 4 est placé entre la palette 1 et le corps de sonde 5. Le plateau 4 est perforé d'un trou 13, laissant passer l'arbre 7. Le trou 13 a un diamètre plus large que le diamètre de l'arbre 7. Selon la figure 1a, des roulements à bille 14 et 15 sont placés autour de l'arbre 7. Le roulement à bille 14 maintient en rotation la palette 1 par rapport au plateau 4. Le roulement à bille 14 favorise la libre rotation de la palette autour de l'axe de rotation 2. Le roulement à bille 15 forme le palier 8. Il est placé entre le corps de sonde 5 et l'arbre 7. Le roulement à bille 14 permet aussi une rotation du plateau 4 autour de l'axe 2 lors du réglage de la position de ce plateau 4 par rapport au corps de sonde 5. Les roulements à bille 14 et 15 ne sont pas représentés sur les figures 1b et 1c.

Selon une caractéristique de réglage de la girouette, il est nécessaire de placer l'ensemble corps de sonde 5 et plateau 4 dans une position connue et figée, dite de référence. Cette position de référence peut être définie, pour tous les couples corps de sonde 5 et plateau 4 du même type que celui décrit, par le parallélisme des axes 10 et 12. Néanmoins cette position de référence peut être quelconque. L'intérêt d'une position de référence commune se situe dans l'indépendance du réglage vis à vis de la linéarité des capteurs.

Dans une position de référence, le corps de sonde 5 et le plateau 4 sont placés dans un banc de calage 16. Le banc de calage 16 possède deux cales 17 et 18 permettant de fixer solidement l'ensemble plateau 4 et corps de sonde 5, par l'intermédiaire du corps de sonde 5, au banc de calage 16. Le corps 5 est fixé dans une position caractéristique dans laquelle un bord du corps de sonde 5 occupe une place identique à celle qu'il occupera par la suite dans un banc de calage de site.

La girouette représentée ici n'a schématiquement qu'un seul capteur d'orientation 3. Le capteur d'orientation 3 est fixé sur le plateau 4. Par exemple le capteur d'orientation 3 comporte un potentiomètre 19 alimenté entre -V et +V. Le signal délivré par le capteur 3 est sensible à la position d'un curseur 20, ou autre excitateur. Le curseur 20 est solidaire de l'arbre 7 et est donc tel que sa position est dépendante de l'orientation de la palette 1. Un convertisseur analogique numérique 21 peut transformer la valeur de la tension fournie par le curseur 20 en un signal binaire 6 dont la valeur indique l'orientation du vent. Ce signal 6 peut être affiché sur un afficheur 22. Préférentiellement, le capteur d'orientation 3 possède des resolvers, ou des synchrodétecteurs.

La définition d'une première caractéristique de montage de la palette est obtenue au cours de la première étape du procédé selon l'invention. Dans cette étape, l'ensemble corps de sonde 5 et plateau 4, lié ensemble selon la position de référence, est placé dans sa position caractéristique sur le banc de calage 16. La palette 1 est mobile. Le banc de calage 16 possède un bras 23. Le bras 23 a une forme de L renversé, et il s'étend verticalement par rapport au corps principal du banc de calage 16. Le bras 23 possède à une extrémité du L une butée en forme de bille 24. La bille 24 a par exemple un diamètre de plusieurs millimètres. Le bras 23 et la butée 24 permettent de placer la palette 1 dans une position maintenue et mécaniquement connue. Ce bras 23 est notamment conçu de manière à ce qu'il puisse être au contact de la palette 1, lorsque le corps de sonde 5 est placé dans sa position caractéristique entre les cales 17 et 18 du banc de calage 16, ou sur un piètage du banc de calage 16. La palette 1 a une forme dérivée d'un cylindre tronqué. Préférentiellement, le bras 23 est conçu de manière à ce que la bille 24 vienne au contact de la palette 1, dans la partie supérieure de la palette qui est opposée au corps de sonde 5 par rapport au plateau 4. Plus particulièrement, la bille 24 vient à un contact proche d'un bord de fuite 25 de la palette 1, lorsqu'elle est orientée selon un vent.

Le banc de calage 16, défini par les cales 17 et 18, et un bras 23 possédant une bille 24, est un instrument de calage reproductible. L'instrument, utilisé à l'usine, pour la définition de la première caractéristique de la palette est identique, selon l'invention, à ceux à utiliser par les compagnies aériennes lorsqu'elles vérifient des girouettes. A cet égard, le banc de calage 16 de la figure 1a est identique au banc de calage 16 de la figure 1c.

Le banc de calage 16 est un instrument qui fait lui aussi l'objet de vérifications. Mais celles ci sont simplifiées, car le matériau de composition de ce banc de calage est très rigide. Le banc de calage 16 n'est donc soumis qu'à de très faibles variations de structure. Il constitue un appareil de référence pour le réglage de girouettes. La répétabilité du réglage dépend de ce banc de calage, qui est robuste. Donc la répétabilité du réglage est améliorée par la présente invention. La palette 1 est en simple appui contre le bras 23 du banc de calage 16. Il n'y a donc pas d'usure de la bille 24

Dans la première étape du procédé de réglage selon l'invention, le corps de sonde 5 et le plateau 4 sont placés, dans leur position mutuelle de référence, dans la position caractéristique sur le banc de calage 16. La palette 1 est alors poussée contre la bille 24 du bras 23. Cet ensemble aboutit à une position de la girouette dans une position connue et maintenue. Dans cette position, la valeur fournie par l'afficheur 22 correspond à une première valeur V1.

Dans une deuxième étape du procédé, le corps de sonde 5 et le plateau 4 sont installés, ensemble et sans aucun démontage, dans un deuxième banc de calage 26. Le banc de calage 26 a ici une forme allongée, et possède deux cales 27 et 28, du même type que les cales 17 et 18, ou possède un piètage. Les cales 27 et 28 permettent de maintenir dans une deuxième position caractéristique l'ensemble plateau 4 et corps de sonde 5. Dans ce montage, selon la figure 1b, la palette 1 est soumise à un vent 29. Le vent 29 a une orientation connue. L'orientation connue du vent 29 est définie par exemple par rapport au plan formé par le banc de calage 26. Préférentiellement l'orientation de ce vent est perpendiculaire au plan formé par le banc de calage 26. La palette 1 s'oriente selon le vent. Dans cette position de la palette 1, la valeur fournie par l'afficheur 22 correspond à une valeur V2. Normalement la valeur V1 n'est pas égale à la valeur V2.

Il est important de noter que le banc 26, et la deuxième position caractéristique du corps de sonde 5 dans le banc 26, sont très rigoureusement associés au banc 16 et à la première position caractéristique du corps de sonde 5. Pour simplifier, on pourrait admettre que si la valeur V1 était nulle, pour un alignement parfait des repérages 9 et 11, la valeur V2 devrait être nulle aussi. Les deux bancs de calage 16 et 26 doivent donc être réalisés en conséquence. En fait, ce qui est fondamental est l'orientation du vent par rapport au banc 26 et au corps de sonde 5, et l'orientation du banc 26, ou du banc 16, par rapport au fuselage de l'avion sur lequel la girouette sera montée.

La différence entre les valeurs V1 et V2 correspond à une différence angulaire des positions de la palette dans les deux configurations : position calée sur le banc de calage 16 et position en soufflerie sur le banc 26. La valeur de cette différence angulaire, ou la différence V1-V2 elle-même, peut être inscrite sur le corps de la palette 2. Elle est ainsi associée à la palette sous la forme d'une étiquette. Cette valeur est préférentiellement gravée sur la palette. Cette valeur de différence permet le réglage de la palette sur des ensembles corps de sonde et plateau différents de ceux de l'usine, tout en étant exactement du même type que celui de l'usine. Cette valeur de réglage peut être également notée sur un document attaché au suivi de la palette.

Selon la figure 1c, la palette 1 est ensuite installée sur le montage corps de sonde 5 et plateau 4 sur site, et cet ensemble est placé sur un banc de calage 16 de site. Le corps de sonde 5 et le plateau 4 correspondent aux éléments de l'avion sur lesquels va être fixée la palette 1. La palette 1 est poussée contre la bille 24 du bras 23 du banc 16 de site. Le curseur 20 pointe alors dans une position connue. Le plateau 4, supportant le potentiomètre 19 est ensuite manoeuvré par rapport au corps de sonde 5. Cette manoeuvre en rotation permet de régler le capteur de manière fiable, et telle que le signal lu sur l'afficheur 22 correspond à une valeur V3. La position à atteindre est celle pour laquelle la valeur V3 est égale à la différence de valeur entre V1 et V2.

Le plateau 4 est fixé au corps de sonde 5 par des oeillères 30 qui sont en vis à vis avec des boulons 31, vissés du corps de sonde 5. Les oeillères ont une forme circulaire, centrée sur l'axe 2. Ce système permet de figer la position du plateau 4 par rapport au corps de sonde 5. Le plateau 4 peut être fixé au corps de sonde 5 par d'autres moyens. Le réglage peut également être réalisé en faisant tourner le stator du capteur de position angulaire par rapport à un plateau 4, fixe par rapport à un corps de sonde 5.

La girouette selon les figures 1a à 1c possède schématiquement un seul capteur d'orientation. Selon une amélioration, la girouette peut être constituée de plusieurs capteurs d'orientation, qui sont préférentiellement fixés au plateau 4. Selon la figure 2a de l'état de la technique, dans le cas où il y a plusieurs capteurs secondaires d'orientation, la rotation des capteurs secondaires est due à un entraînement par un pignon 32, ou une crémaillère. Le pignon 32, symbolisé par une crémaillère, est solidaire du rotor du capteur, et est entraîné par un pignon 33 de l'arbre central 7. La rotation de l'arbre 7, et donc du pignon 33 est directement dépendante de l'orientation de la palette 1, selon le vent 34. L'indication d'orientation est fournie deux fois par deux capteurs secondaires d'orientation distincts : les capteurs 35 et 36. Pour simplifier la compréhension, les capteurs secondaires 35 et 36 sont des potentiomètres. Préférentiellement, les capteurs d'orientation 35 et 36 sont des resolvers ou des synchrodétecteurs.

Le fait d'avoir plusieurs capteurs d'orientation permet de multiplier les sources d'information. En effet, si les deux capteurs d'orientation ne donnent pas une même valeur, alors un signal d'alarme peut être déclenché pour avertir le pilote du dysfonctionnement du dispositif de mesure de l'orientation du vent. Le pilotage de l'avion devra alors être effectué en conséquence.

Le capteur secondaire 35 a un axe de rotation 37, et le capteur secondaire 36 a un axe de rotation 38. Les axes de rotations 2, 37 et 38 sont parallèles entre eux et appartiennent à un même plan. Le vent crée une force de traînée, qui est appliquée à la seule partie externe de la girouette : la palette 1. Or l'arbre 7 solidaire de la palette 1 est également relié au corps de sonde 5. Le corps de sonde 5 étant une partie interne de la girouette, il n'est pas soumis à la force de traînée. L'axe d'orientation de l'arbre 7 dévie alors légèrement de sa position initiale. Le corps de sonde 5 étant solidaire du plateau 4, et étant également solidaire de la palette 1 par le biais de l'arbre 7, il peut en résulter une erreur dans la valeur de mesure de l'orientation. L'erreur vient du jeu, même faible, qui existe dans les roulements à billes 14 et 15.

Les figures 2a et 2b représentent schématiquement l'impact de cette déviation dans l'orientation de l'arbre 7, selon l'orientation du vent par rapport au plan défini par les axes de rotation 2, 37 et 38. Il apparaît ainsi sur la figure 2a, qui représente l'état de la technique, que la plus forte variation du pignon 33 de l'arbre 7 est observé pour un vent principal orienté perpendiculairement au plan défini par les axes de rotation 2, 37 et 38. Cette position est celle, pour laquelle les capteurs d'orientation présentent, en cas de déviation, une plus grande erreur dans la valeur qu'ils fournissent. En effet, le déplacement de l'axe 2, provoque un léger déplacement du pignon 32, qui aboutit à la rotation des capteurs secondaires 35 et 36, alors que le pignon 33 n'a pas tourné.

A l'opposé, dans la figure 2b selon l'invention, l'orientation du plan contenant les axes de rotation 2, 37 et 38 est défini de manière à provoquer le minimum d'erreur dans la valeur donnée par les capteurs pour les conditions de vol principales. Dans celles-ci, l'orientation de la palette 1 possède un bord d'attaque 39 qui définit un plan avec l'axe 2. Ce plan de la palette, lorsqu'il est orienté dans une direction principale (la plus fréquente) de la palette 1 est confondu selon l'invention avec le plan qui contient les axes 37 et 38. Les conditions de vol principales peuvent être celles correspondant à l'orientation du vent pendant la direction de croisière, ou celles correspondant au décrochage. Dans ces deux cas, elles sont critiques. Il convient alors, selon l'invention, que pour ces directions critiques, les valeurs mesurées soient les plus justes possible, sans les erreurs dues à la déviation.

Une autre méthode pour compenser l'erreur due au jeu des roulements peut consister à exercer sur le banc de calage 16 un effort sur la palette correspondant à la traînée aérodynamique, lors de l'essai en soufflerie. Ce faisant, on applique un effort connu sur la palette, avec le banc de calage de site ou d'usine. La résultante de cet effort connu est orthogonale à un axe de rotation de la palette.

## Revendications

1. Procédé de réglage d'une girouette dans lequel :
- on place sur site la girouette dans un banc de calage de site (16), et
- on règle mécaniquement la position d'un capteur d'orientation (3) de la girouette par rapport à un corps de sonde (5) de la girouette, et par rapport à une palette de la girouette, **caractérisé en ce que** :
- à l'usine, on fige dans une relation de référence les positions respectives du capteur d'orientation et du corps de sonde,
- on place le corps de sonde sur un premier banc de calage d'usine (16),
- on maintient la palette dans une position maintenue, et mécaniquement connue par rapport au premier banc de calage d'usine et on mesure un premier signal angulaire (6) délivré par le capteur d'orientation pour cette position de la palette,
- on soumet la girouette avec la même relation de référence à un vent (29), obtenu par soufflerie, d'orientation connue par rapport au premier banc de calage et on mesure un deuxième signal angulaire délivré par le capteur d'orientation pour une position de la palette correspondant à ce vent d'orientation connue,
- sur site, on place le corps de sonde sur un banc de calage de site identique au premier banc de calage d'usine, on replace la palette dans une même position maintenue, par rapport au banc de calage de site, et on décale le capteur d'orientation par rapport au corps de sonde pour qu'un angle de décalage d'une référence (9) du capteur d'orientation par rapport à une référence (11) du corps de sonde soit égal à la différence des deux signaux angulaire.

2. Procédé selon la revendication 1, **caractérisé en ce que**
- sur site, on place le corps de sonde sur un banc de calage de site identique au premier banc de calage d'usine, on replace la palette dans une même position maintenue, par rapport au banc de calage de site, et on mesure un troisième signal délivré par le capteur d'orientation pour cette position maintenue de la palette,
- on règle mécaniquement la position du capteur d'orientation pour que le troisième signal soit égal à une différence des premier et deuxième signaux.

3. Procédé selon l'une des revendications 1 à 2, **caractérisé en ce que** pour placer la palette dans la position maintenue et mécaniquement connue par rapport au banc de calage d'usine, on pousse une palette de la girouette contre un bras (23) du banc de calage d'usine.

4. Procédé selon l'une des revendications 1 à 3, **caractérisé en ce qu'**on inscrit la différence des premier et deuxième signaux sur la girouette, de préférence sur la palette.

5. Procédé selon l'une des revendications 1 à 4, **caractérisé en ce qu'**on choisit en soufflerie, un vent d'orientation connue correspondant à une orientation principale d'un mobile sur lequel la girouette est montée.

6. Procédé selon l'une des revendications 1 à 5, **caractérisé en ce que**
- on applique un effort connu sur la palette, avec le banc de calage de site ou d'usine, la résultante de cet effort connu étant orthogonale à un axe de rotation de la palette.

7. Dispositif de réglage d'une girouette (1) de mesure de l'orientation du vent, le dispositif comprenant une girouette, cette girouette comportant une palette (1) sensible au vent, solidaire d'un arbre (7) supportant un indicateur (20) pointant sur un capteur d'orientation (19) monté sur un plateau (4) support de capteur, et un corps de sonde (5), ce plateau étant orientable par rapport au corps de sonde, **caractérisé en ce qu'**il comporte un banc de calage (16, 26), et pour chaque girouette une étiquette de réglage du plateau par rapport au corps de sonde et par rapport à la palette, une fois que la girouette est disposée dans la banc de calage.

8. Dispositif selon la revendication 7, **caractérisée en ce que** une indication de l'étiquette est gravée sur la palette.

9. Dispositif selon l'une des revendications 7 à 8, **caractérisé en ce qu'**il comporte un banc de calage d'usine et un banc de calage de site, ce banc de calage de site étant une image identique du banc de calage d'usine.

10. Dispositif selon l'une des revendications 7 à 9, **caractérisé en ce que** l'arbre (7) est tournant, **en ce que** l'arbre entraîne un organe de mesure qui comporte un jeu de capteurs, chaque capteur tournant autour d'un axe parallèle à l'arbre tournant, **en ce que** les axes (37, 38) des capteurs sont situés dans un plan passant par un bord d'attaque (39) de la palette et par l'axe de rotation de l'arbre de rotation de la palette pour une position la plus fréquente de la girouette.

11. Dispositif selon la revendication 10, **caractérisé en ce que** la position principale est orientée selon un vent correspondant au décrochage.

12. Dispositif selon la revendication 10, **caractérisé en ce que** la position principale est orientée selon un vent correspondant à une direction de croisière.

## Claims

1. Method for adjusting a weather vane in which:
- the weather vane is placed, on site, in a site setting rig (16), and
- the position of an orientation sensor (3) that senses the orientation of the weather vane with respect to a probe body (5) of the weather vane and with respect to a vane of the weather vane is mechanically adjusted, **characterized in that**:
- at the factory, the respective positions of the orientation sensor and of the probe body are fixed in a reference relationship,
- the probe body is placed on a first factory setting rig (16),
- the vane is kept in a sustained position which is mechanically known with respect to the first factory setting rig, and a first angular signal (6) delivered by the orientation sensor for this vane position is measured,
- the weather vane, maintaining the same reference relationship, is subjected to a wind (29), obtained by a wind tunnel, of known direction with respect to the first setting rig, and a second angular signal delivered by the orientation sensor for a vane position corresponding to this wind of known direction is measured,
- on site, the probe body is placed on a site setting rig identical to the first factory setting rig, the vane is put back in the same sustained position with respect to the site setting rig, and the orientation sensor is offset with respect to the probe body so that an offset angle of a reference (9) of the orientation sensor with respect to a reference (11) of the probe body is equal to the difference between the two angular signals.

2. Method according to Claim 1, **characterized in that**
- on site, the probe body is placed on a site setting rig identical to the first factory setting rig, the vane is put back in the same sustained position with respect to the site setting rig, and a third signal delivered by the orientation sensor for this sustained vane position is measured,
- the position of the orientation sensor is mechanically adjusted so that the third signal is equal to a difference between the first and second signals.

3. Method according to either of Claims 1 and 2, **characterized in that**, in order to place the vane in the sustained position that is mechanically known with respect to the factory setting rig, a vane of the weather vane is pressed against an arm (23) of the factory setting rig.

4. Method according to one of Claims 1 to 3, **characterized in that** the difference between the first and second signals is marked on the weather vane, preferably on the vane.

5. Method according to one of Claims 1 to 4, **characterized in that** a wind of known direction corresponding to a main orientation of a moving part on which the weather vane is mounted is chosen in the wind tunnel.

6. Method according to one of Claims 1 to 5, **characterized in that**
- a known force is applied to the vane, using the site or factory setting rig, the resultant of this known force being orthogonal to an axis of rotation of the vane.

7. Device for adjusting a weather vane (1) for measuring the direction of the wind, the device comprising a weather vane, this weather vane comprising a wind-sensitive vane (1), secured to a shaft (7) supporting an indicator (20) pointing to an orientation sensor (19) mounted on a sensor support plate (4), and a probe body (5), this plate being orientable with respect to the probe body, **characterized in that** it comprises a setting rig (16, 26) and, for each weather vane, a label for adjusting the plate with respect to the probe body and with respect to the vane once the weather vane is mounted in the setting rig.

8. Device according to Claim 7, **characterized in that** an indication from the label is engraved on the vane.

9. Device according to either of Claims 7 and 8, **characterized in that** it comprises a factory setting rig and a site setting rig, this site setting rig being an identical image of the factory setting rig.

10. Device according to one of Claims 7 to 9, **characterized in that** the shaft (7) is a rotary shaft, **in that** the shaft drives a measurement member which comprises a set of sensors, each sensor rotating about an axis parallel to the rotary shaft, and **in that** the axes (37, 38) of the sensors are situated in a plane passing through a leading edge (39) of the vane and through the axis of rotation of the rotation shaft of the vane for the most frequent position of the weather vane.

11. Device according to Claim 10, **characterized in that** the main position is oriented according to a wind corresponding to stall.

12. Device according to Claim 10, **characterized in that** the main position is oriented according to a wind corresponding to a cruising direction.

## Patentansprüche

1. Verfahren zur Einstellung eines Windrichtungsanzeigers, bei dem:
- der Windrichtungsanzeiger am Standort in eine Standort-Einstellbank (16) eingesetzt wird, und
- die Position eines Orientierungssensors (3) des Windrichtungsanzeigers bezüglich eines Sondenkörpers (5) des Windrichtungsanzeigers und bezüglich einer Fahne des Windrichtungsanzeigers mechanisch geregelt wird, **dadurch gekennzeichnet, dass**:
- im Werk die jeweiligen Positionen des Orientierungssensors und des Sondenkörpers in einer Referenzbeziehung blockiert werden,
- der Sondenkörper auf einer ersten Werks-Einstellbank (16) angeordnet wird,
- die Fahne in einer gehaltenen und mechanisch bekannten Position bezüglich der ersten Werks-Einstellbank gehalten und ein erstes Winkelsignal (6) gemessen wird, das vom Orientierungssensor für diese Position der Fahne geliefert wird,
- der Windrichtungsanzeiger mit der gleichen Referenzbeziehung einem durch ein Gebläse erhaltenen Wind (29) mit einer bezüglich der ersten Einstellbank bekannten Ausrichtung ausgesetzt und ein zweites Winkelsignal gemessen wird, das vom Orientierungssensor für eine Position der Fahne geliefert wird, die diesem Wind bekannter Ausrichtung entspricht,
- der Sondenkörper am Standort auf einer Standort-Einstellbank angeordnet wird, die gleich der ersten Werks-Einstellbank ist, die Fahne in der gleichen gehaltenen Position bezüglich der Standort-Einstellbank angeordnet wird, und der Orientierungssensor bezüglich des Sondenkörpers verschoben wird, damit ein Verschiebungswinkel eines Bezugspunkts (9) des Orientierungssensors bezüglich eines Bezugspunkts (11) des Sondenkörpers gleich der Differenz der zwei Winkelsignale ist.

2. Verfahren nach Anspruch 1, **dadurch gekennzeichnet, dass**
- der Sondenkörper am Standort auf einer Standort-Einstellbank gleich der ersten Werks-Einstellbank angeordnet wird, die Fahne in der gleichen gehaltenen Position bezüglich der Standort-Einstellbank angeordnet wird, und ein drittes Signal gemessen wird, das vom Orientierungssensor für diese gehaltene Position der Fahne geliefert wird,
- die Position des Orientierungssensors mechanisch so geregelt wird, dass das dritte Signal gleich einer Differenz des ersten und des zweiten Signals ist.

3. Verfahren nach einem der Ansprüche 1 und 2, **dadurch gekennzeichnet, dass** zum Einsetzen der Fahne in die gehaltene und mechanisch bekannte Position bezüglich der Werks-Einstellbank eine Fahne des Windrichtungsanzeigers gegen einen Arm (23) der Werks-Einstellbank gedrückt wird.

4. Verfahren nach einem der Ansprüche 1 bis 3, **dadurch gekennzeichnet, dass** die Differenz des ersten und des zweiten Signals auf dem Windrichtungsanzeiger, vorzugsweise auf der Fahne, eingetragen wird.

5. Verfahren nach einem der Ansprüche 1 bis 4, **dadurch gekennzeichnet, dass** im Gebläse ein Wind bekannter Ausrichtung gewählt wird, die einer Hauptausrichtung eines beweglichen Körpers entspricht, auf den der Windrichtungsanzeiger montiert ist.

6. Verfahren nach einem der Ansprüche 1 bis 5, **dadurch gekennzeichnet, dass**
- mit der Standort- oder Werks-Einstellbank eine bekannte Kraft auf die Fahne ausgeübt wird, wobei die Resultierende dieser bekannten Kraft orthogonal zu einer Drehachse der Fahne ist.

7. Vorrichtung zur Einstellung eines Windrichtungsanzeigers (1) zur Messung der Windrichtung, wobei die Vorrichtung einen Windrichtungsanzeiger aufweist, wobei dieser Windrichtungsanzeiger eine auf den Wind ansprechende Fahne (1), die fest mit einer Welle (7) verbunden ist, die einen auf einen Orientierungssensor (19) zeigenden Anzeiger (20) trägt, der auf eine Sensortragplatte (4) montiert ist, und einen Sondenkörper (5) enthält, wobei diese Platte bezüglich des Sondenkörpers ausrichtbar ist, **dadurch gekennzeichnet, dass** sie eine Einstellbank (16, 26) und für jeden Windrichtungsanzeiger ein Einstelletikett der Platte bezüglich des Sondenkörpers und bezüglich der Fahne aufweist, wenn der Windrichtungsanzeiger in der Einstellbank angeordnet ist.

8. Vorrichtung nach Anspruch 7, **dadurch gekennzeichnet, dass** eine Anzeige des Etiketts auf die Fahne eingraviert ist.

9. Vorrichtung nach einem der Ansprüche 7 und 8, **dadurch gekennzeichnet, dass** sie eine Werks-Einstellbank und eine Standort-Einstellbank aufweist, wobei diese Standort-Einstellbank ein identisches Abbild der Werks-Einstellbank ist.

10. Vorrichtung nach einem der Ansprüche 7 bis 9, **dadurch gekennzeichnet, dass** die Welle (7) sich dreht, dass die Welle ein Messorgan antreibt, das einen Satz von Sensoren aufweist, wobei jeder Sensor um eine Achse parallel zur Drehwelle dreht, dass die Achsen (37, 38) der Sensoren sich in einer Ebene befinden, die für die häufigste Position des Windrichtungsanzeigers durch eine Vorderkante (39) der Fahne und durch die Drehachse der Drehwelle der Fahne verläuft.

11. Vorrichtung nach Anspruch 10, **dadurch gekennzeichnet, dass** die Hauptposition gemäß einem dem Abheben entsprechenden Wind ausgerichtet ist.

12. Vorrichtung nach Anspruch 10, **dadurch gekennzeichnet, dass** die Hauptposition gemäß einem einer Reiseflugrichtung entsprechenden Wind ausgerichtet ist.
